# FASCICULE DE BREVET EUROPEEN

(11) **EP 2 299 644 B1**
(45) Date de publication et mention de la délivrance du brevet: **31.10.2012**
(21) Numéro de dépôt: 10166767.3
(22) Date de dépôt: 22.06.2010
(51) Int. Cl.: H04L 29/06, G06F 21/00

(54) **Traitement de données avec authentification a posteriori**
Datenverarbeitung mit Authentifizierung im Nachhinein
Data processing with retroactive authentication

(30) Priorité: 29.06.2009 FR 0954433
(43) Date de publication de la demande: 23.03.2011
(73) Titulaire: France Télécom, 75015 Paris (FR)
(72) Inventeur: Giordani, Michel, 38420, LE VERSOUD (FR); Rigolle, Yoann, 38240, MEYLAN (FR); Garnier de Falletans, Guillaume, 38000, GRENOBLE (FR)

(56) Documents cités:
- US-A1- 2001 039 504
- US-A1- 2002 178 271
- US-A1- 2008 086 767

## Description

L'invention concerne le domaine du traitement de données informatique et plus précisément un procédé de traitement de données et dispositif associé.

Le traitement de données informatiques sensibles pose différents problèmes. En particulier, dans le monde médical en France, la législation impose une forte sécurisation des données informatiques médicales et recommande pour cela que les professionnels de santé utilisent une carte à puce comme moyen d'authentification forte pour accéder à ces données médicales.

L'authentification de l'entité requérant un accès à des données informatiques est en effet un moyen privilégié pour garantir la sécurisation des données informatiques sensibles. L'authentification simple (typiquement avec identifiant et simple mot de passe) est utilisée couramment mais n'offre pas un niveau de sécurité suffisant pour assurer la protection des données informatiques sensibles. Sa principale faiblesse réside dans la facilité avec laquelle l'identité de l'entité peut être usurpée: grâce par exemple à des techniques d'attaque basée sur l'ingénierie sociale qui permettent de retrouver un mot de passe défini par un utilisateur.

II est donc nécessaire d'utiliser une authentification forte pour une protection efficace de données informatiques sensibles. L'utilisation de la carte à puce, en association avec une deuxième donnée d'authentification de type code PIN, est une solution d'authentification forte permettant par exemple d'obtenir un niveau de sécurité suffisant pour contrôler l'accès à des données informatiques sensibles.

Or une telle authentification forte fait peser différentes contraintes sur l'utilisateur: il doit être porteur de son moyen d'authentification (carte), disposer d'un lecteur approprié pour ce moyen d'authentification, ainsi que d'un terminal compatible avec la méthode d'authentification requise pour accéder au service. Il n'est donc pas systématiquement possible pour cet utilisateur de s'authentifier de manière appropriée auprès d'un serveur contrôlant l'accès à des données, notamment lorsque cet utilisateur a une activité nomade et qu'il se déplace fréquemment sans pouvoir emporter avec lui tout le matériel nécessaire.

Les inventeurs ont donc constaté le besoin de disposer d'une technique de sécurisation de l'accès à des données informatiques sensibles qui présente un niveau de sécurité équivalent à celui procuré par une authentification forte, sans toutefois être aussi contraignant qu'une authentification forte.

Le document US 2008/086767 décrit une méthode de traitement de données dans laquelle un premier utilisateur authentifié peut demander à effectuer un changement sur des données personnelles. L'autorisation d'un deuxième utilisateur authentifié est cependant nécessaire pour cela.

Un des buts de l'invention est de remédier à des problèmes, inconvénients ou insuffisances de l'état de la technique et/ou d'y apporter des améliorations.

L'invention concerne, selon un premier mode de réalisation, un premier procédé de traitement de données mis en oeuvre par un serveur, selon la revendication 1.

Ce premier mode de réalisation correspond à une méthode d'authentification forte a posteriori.

Selon ce premier mode de réalisation de l'invention, un premier utilisateur peut bénéficier d'un premier accès à un service de traitement de données sensibles. Les opérations demandées lors d'un accès sans authentification forte, et donc les données résultant de ces opérations, ne sont validées, c'est-à-dire exécutées effectivement, que dans un second temps sur demande d'un deuxième utilisateur (en général, le même premier utilisateur ou son délégataire), lors d'un accès ultérieur avec authentification forte.

C'est par découplage entre une première phase où les opérations à exécuter sont définies, voire simulées, et une deuxième phase où ces opérations sont validées, c'est-à-dire exécutées effectivement, que l'invention parvient à ce résultat.

Pour raisons de sécurité, une relation entre le premier utilisateur connecté lors du premier accès et le deuxième utilisateur connecté lors du deuxième accès est en outre vérifiée avant de valider les opérations demandées par le premier utilisateur, afin de garantir que seul un deuxième utilisateur autorisé (en général le même premier utilisateur ou son délégataire) puisse valider de telles opérations.

La sécurité est garantie en ce que la confiance dans les opérations de traitement définies est donnée a posteriori, lors de la validation de ces opérations suite à une authentification forte.

Un deuxième mode de réalisation correspond à un deuxième procédé de traitement de données mis en oeuvre par un serveur, comprenant
- une étape de réception, lors d'une première session de communication établie avec ledit serveur, d'une demande formulée par un premier utilisateur pour autoriser au moins une opération de traitement à être exécutée sur des premières données;
- une étape d'exécution d'une dite opération de traitement sur lesdites premières données, lors d'une deuxième session de communication établie avec ledit serveur postérieurement à ladite première session pour un deuxième utilisateur,
ladite étape d'exécution étant destinée à être mise en oeuvre à condition, d'une part, que le premier utilisateur ait été authentifié par une méthode d'authentification forte lors de la première session, et, d'autre part, qu'au moins une relation entre les premier et deuxième utilisateurs ait été vérifiée.

Ce deuxième mode de réalisation correspond à une méthode d'authentification forte a priori.

Dans ce deuxième mode de réalisation, un premier utilisateur peut bénéficier d'un accès à un service de traitement de données sensibles avec authentification forte lors de laquelle ce premier utilisateur requiert une autorisation pour exécuter des opérations, lors d'un accès ultérieur sans authentification forte.

Dans ce cas, la confiance est donnée a priori pour des actions à définir et valider lors d'une session ultérieure établie avec un niveau de confiance plus faible.

Là encore, pour raisons de sécurité, une relation entre le premier utilisateur connecté lors du premier accès et le deuxième utilisateur connecté lors du deuxième accès est en outre vérifiée avant de valider les opérations demandées par le deuxième utilisateur, afin de garantir que seules les opérations demandées par un deuxième utilisateur autorisé puisse être validées.

Selon un mode de réalisation du deuxième procédé, l'étape d'exécution est destinée à être mise en oeuvre si une condition formulée par le premier utilisateur lors de la première session est vérifiée au moment de ladite exécution.

Cette condition vise à limiter les risques d'atteinte aux données moyennant cette condition imposée par ce premier utilisateur : par exemple par limitation de la nature des opérations demandées ou limitation à une période de temps prédéfinie.

Les premier et deuxième procédés se prêtent à différents modes de réalisation.

Selon un premier mode de réalisation du premier ou deuxième procédé, ladite relation est vérifiée si une relation est vérifiée entre une première information propre au premier utilisateur et une deuxième information propre au deuxième utilisateur. On vérifie ainsi que les deux utilisateurs ont un lien entre eux au travers d'informations qu'ils détiennent chacun.

Selon encore un autre mode de réalisation du premier ou deuxième procédé, ladite première, respectivement deuxième, information est fournie audit serveur par le premier, respectivement deuxième, utilisateur, lors de ladite première, respectivement deuxième, session. Ceci permet de renforcer la sécurité et les risques d'intervention d'un utilisateur pirate: la première information est par exemple un secret détenu par le premier utilisateur, partagée avec le deuxième utilisateur, et qui doit être fournie par le deuxième utilisateur.

Selon un autre mode de réalisation du premier ou deuxième procédé, ladite relation étant vérifiée si le deuxième utilisateur a délégué des droits au premier utilisateur. Ceci permet à plusieurs utilisateurs de coopérer pour la réalisation d'opération sur des données.

Selon encore un autre mode de réalisation du premier ou deuxième procédé, ladite relation est vérifiée si un identifiant du premier utilisateur est identique à un identifiant du deuxième utilisateur. Dans certains cas, une identité stricte entre les deux utilisateurs est imposée.

Les différents modes de réalisation mentionnés ci-dessus sont combinables entre eux pour la mise en oeuvre de l'invention, notamment il est possible de prévoir que plusieurs relations entre les deux utilisateurs doivent être vérifiées: égalité entre identifiants ou délégation de droits, avec ou sans relation entre deux informations propres, ou autre condition supplémentaire.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un dispositif de traitement de données et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'invention est mise en oeuvre au moyen de composants logiciels et/ou matériels. Dans cette optique, le terme module peut correspondre dans ce document aussi bien à un composant logiciel qu'à un composant matériel ou encore à un composant matériel programmable, avec ou sans processeur intégré.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. De la même manière, un composant matériel correspond à tout élément d'un ensemble matériel (ou hardware) apte à mettre en oeuvre une fonction ou un ensemble de fonctions, selon ce qui est décrit ci-dessous pour le module concerné.

L'invention concerne, selon un deuxième aspect, un premier dispositif de traitement de données, comprenant
- des moyens pour recevoir, lors d'une première session de communication établie, une demande formulée par un premier utilisateur définissant au moins une opération de traitement à exécuter sur des premières données;
- des moyens d'exécution d'une dite opération de traitement sur lesdites premières données, lors d'une deuxième session de communication établie avec ledit serveur postérieurement à ladite première session pour un deuxième utilisateur;
lesdits moyens d'exécution étant destinés à être activés à condition, d'une part, que le deuxième utilisateur ait été authentifié par une méthode d'authentification forte lors de la deuxième session, et, d'autre part, qu'au moins une relation entre les premier et deuxième utilisateurs ait été vérifiée.

Ce premier dispositif met en oeuvre une authentification forte a posteriori.

Un deuxième dispositif de traitement de données, comprend
- des moyens pour recevoir, lors d'une première session de communication établie avec ledit serveur, d'une demande formulée par un premier utilisateur pour autoriser au moins une opération de traitement à être exécutée sur des premières données;
- des moyens d'exécution d'une dite opération de traitement sur lesdites premières données, lors d'une deuxième session de communication établie avec ledit serveur postérieurement à ladite première session pour un deuxième utilisateur,
lesdits moyens d'exécution étant destinés à être activés à condition, d'une part, que le premier utilisateur ait été authentifié par une méthode d'authentification forte lors de la première session, et, d'autre part, qu'au moins une relation entre les premier et deuxième utilisateurs ait été vérifiée.

Ce deuxième dispositif met en oeuvre une authentification forte a priori.

Les avantages énoncés pour les premier et deuxième procédés sont transposables respectivement aux premier et deuxième dispositifs.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente un organigramme d'un premier mode de réalisation du procédé selon l'invention;
- les figures 3a et 3b représentent le contenu et l'agencement d'espaces mémoire utilisé pour la mise en oeuvre du procédé selon l'invention.

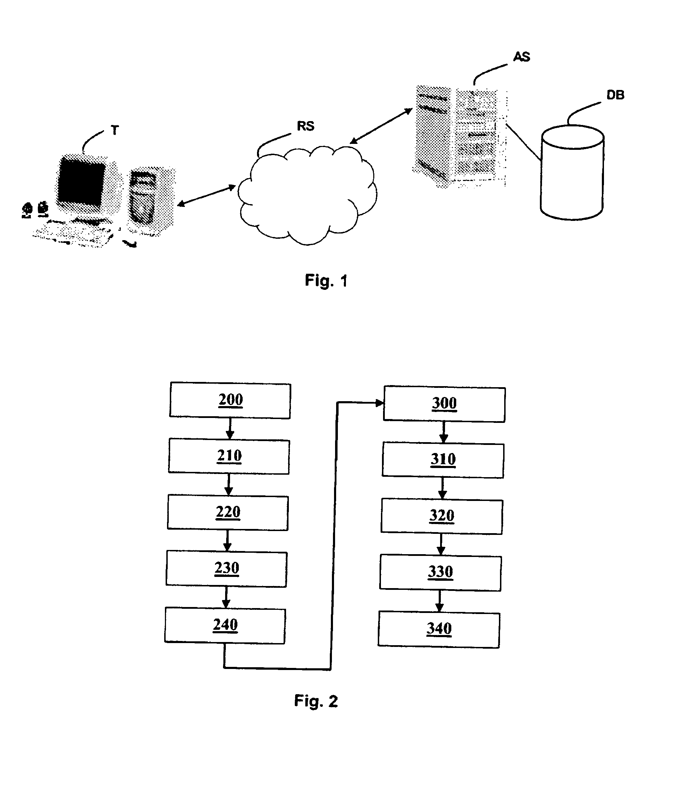

L'invention est décrite plus en détail par référence à la figure 1 dans le contexte de son application à un service de traitement de données médicales pour des professionnels de santé. Ce service est mis en oeuvre au moyen d'un serveur AS, sous forme typiquement de serveur Web, accessible via un réseau de télécommunication RS. Un tel serveur est accessible à partir d'un terminal T, connecté au réseau RS, terminal à partir duquel un utilisateur peut envoyer des requêtes pour demander l'exécution d'une opération de traitement de données, envoyer et/ou recevoir des données.

Différentes opérations de traitement de données sont susceptibles d'être mises en oeuvre au moyen de ce serveur, sur requête d'un utilisateur:
- réception et/ou stockage de données fournies par l'utilisateur;
- édition et/ou modification de données stockées;
- transmission de données à un utilisateur ou à une entité;
- suppression de données stockées;
- etc;

Les données sont stockées dans une base de données base de données DB, associée au serveur applicatif AS. Les données stockées sont par exemples:
- des données médicales sur l'état de santé d'un patient;
- des feuilles de soin à transmettre à la sécurité sociale;
- des ordonnances établies pour un patient;
- etc;

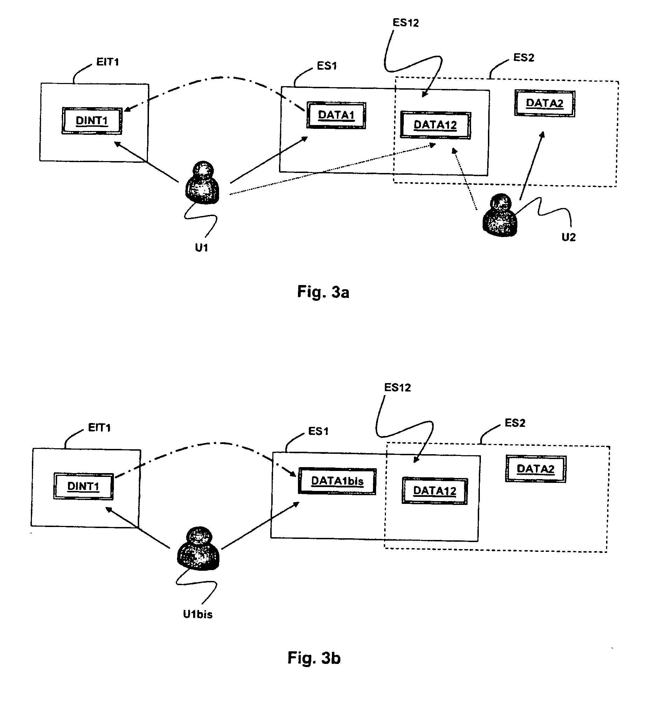

Le serveur AS gère des droits d'accès par utilisateur pour les données stockées dans la base de données: à chaque utilisateur est associé un ensemble de données pour lesquelles il dispose d'une autorisation d'accès, ces données étant par exemple stockées dans un espace de stockage de données qui lui est propre. Par exemple, comme représenté à la figure 3a ou 3b, un espace de stockage ES1 est affecté à un utilisateur U1 et un espace de stockage ES2 est affecté à un utilisateur U2, ces deux espaces ayant une partie commune ES12 pour les données à accès partagé entre les utilisateurs U1 et U2.

Une méthode d'authentification est utilisée pour authentifier chaque utilisateur demandant à effectuer une opération sur de telles données.

Selon la méthode d'authentification choisie pour authentifier un utilisateur, le niveau de sécurité sera plus ou moins élevé. Une méthode d'authentification faible repose sur un seul facteur (par exemple, l'utilisateur fournit un mot de passe). Une méthode d'authentification forte repose sur deux facteurs ou plus; ces facteurs étant par exemple choisis dans la liste ci-dessous:
- ce que l'utilisateur connait (par exemple, un mot de passe, un code PIN, une phrase secrète, etc);
- ce que l'utilisateur détient (par exemple, une carte magnétique, une carte RFID, une clé USB, un PDA, une carte à puce, etc);
- ce que l'utilisateur est (pour une personne physique: toute empreinte biométrique caractéristique de l'utilisateur: empreinte digitale, empreinte rétinienne, structure de la main, structure osseuse du visage, etc);
- ce que l'utilisateur sait faire (pour une personne physique: signature manuscrite, reconnaissance de la voix, un type de calcul connu de l'utilisateur seule, etc).

Dans l'exemple d'application de l'invention décrit ici, on suppose que le niveau de confidentialité des données traitées par le serveur est tel qu'une authentification forte est requise comme condition préalable à l'exécution d'une opération sur des données impliquant une écriture (création, modification et suppression) de données dans la base de données DB. Par contre, pour une consultation de données ou une opération n'impliquant qu'une lecture de données de la base de données DB, on suppose qu'une authentification simple est suffisante pour autoriser ce type de consultation ou d'opération. C'est ainsi qu'on assure à tout moment une confiance dans les données sensibles.

Le serveur AS propose deux modes d'accès aux données gérées par ce serveur:
- un premier mode d'accès, dit mode fortement sécurisé, supposant que l'utilisateur connecté soit préalablement authentifié par une méthode d'authentification forte, la session étant dans ce cas dite session fortement sécurisée;
- un deuxième mode d'accès, dit mode faiblement sécurisé, supposant que l'utilisateur connecté soit préalablement authentifié par une méthode d'authentification faible, sans qu'une authentification forte soit requise, la session étant dans ce cas dite session faiblement sécurisée;

Lors d'un accès en mode fortement sécurisé, un utilisateur Ui (U1 respectivement U2) bénéficie de la totalité des droits d'accès: à la fois en lecture et en écriture sur les données de l'espace de stockage ESi (ES1 respectivement ES2) qui lui est associé. Lors d'un tel accès, toutes les opérations demandées par cet utilisateur sont autorisées et exécutées par le serveur sur requête de l'utilisateur.

Lors d'un accès en mode faiblement sécurisé, un utilisateur Ui bénéficie de droits d'accès restreints: uniquement en lecture sur les données de l'espace de stockage ESi qui lui est associé, mais pas en écriture. Lors d'un tel accès, seules les opérations ne requérant pas une écriture de données de cet espace de stockage ESi sont autorisées et exécutées. Pour les autres opérations, l'utilisateur peut en requérir l'exécution, voire en visualiser le résultat, c'est-à-dire visualiser les données résultantes de l'opération, mais non valider les opérations.

En effet, les opérations demandées par un premier utilisateur U1 lors d'un accès en mode faiblement sécurisé ne sont pas validées immédiatement. Elles ne peuvent être validées que lors d'une deuxième session de communication, établie postérieurement à la première session de communication par un deuxième utilisateur U1bis, à condition:
- d'une part, que cette deuxième session soit établie en mode fortement sécurisé, c'est-à-dire que le deuxième utilisateur U1bis soit authentifié par une méthode d'authentification forte;
- d'autre part, qu'une relation prédéterminée entre les premier et deuxième utilisateurs U1 et U1bis soit vérifiée.

Ce mécanisme avec deux modes d'accès différents permet de valider a posteriori, lors d'une session fortement sécurisé, les opérations demandées par un premier utilisateur U1 lors d'une précédente session faiblement sécurisé. Ce résultat est obtenu en découplant la phase de définition des opérations à exécuter et la phase de validation de ces opérations, l'authentification forte n'étant requise que pour la phase finale, c'est-à-dire la phase de validation.

Le niveau de sécurité du système s'approche de celui d'un système qui proposerait uniquement le mode d'accès fortement sécurisé, puisque les opérations exécutées ne sont validées, c'est-à-dire rendues effectives, que sous condition d'authentification forte du deuxième utilisateur. On garantit ainsi que seul un utilisateur dûment autorisé puisse valider des opérations de traitement et modifier les données stockées par le serveur. La sécurité est garantie en ce que la confiance dans les opérations de traitement définies est donnée a posteriori, lors de la validation de ces opérations.

Afin d'opérer une validation a posteriori, le serveur est conçu pour mémoriser des données, dites données intermédiaires DINT1, à partir desquelles une opération demandée par un premier utilisateur U1 lors de la première session peut être validée, c'est-à-dire exécutée effectivement, lors de la deuxième session. Ces données intermédiaires DINT1 comprennent par exemple:
- lorsque l'opération demandée est un stockage de données DATA1 fournies par l'utilisateur: les données DATA1 fournies elles-mêmes et, optionnellement, un code identifiant l'opération demandée;
- lorsque l'opération demandée est une transmission à un utilisateur tiers de données DATA1 fournies par l'utilisateur: les données DATA1 fournies elles-mêmes et, optionnellement, un code identifiant l'opération demandée;
- lorsque l'opération demandée modifie des données DATA1 (opération d'édition, de modification, transformation de données, etc): soit les données DATA1 bis résultant de cette opération, soit les données DATA1 à modifier en association avec un code identifiant l'opération demandée.
- lorsque l'opération demandée supprime des données DATA1 (opération de suppression): les données DATA1 à supprimer en association avec un code identifiant l'opération demandée.

Les données intermédiaires DINT1 ainsi définies sont stockées temporairement dans un espace mémoire propre à l'utilisateur U1 ayant formulé la demande d'exécution d'une opération et sont accessibles uniquement par cet utilisateur U1. Cet espace mémoire est appelé ici espace mémoire intermédiaire de l'utilisateur U1 et est référencé EIT1 sur la figure 3a ou 3b. Le serveur AS utilise cet espace mémoire intermédiaire EIT1 pour le stockage de données intermédiaires DINT1 relatives à des opérations demandées par l'utilisateur U1. Le serveur AS fournit à l'utilisateur U1 associé à cet espace mémoire intermédiaire une vue sur le contenu de cet espace.

Tant qu'une opération sur des données DATA1 contenues l'espace de stockage ES1 réalisée par l'utilisateur U1 n'a pas été validée lors une session fortement sécurisée par un utilisateur U1bis, les autres utilisateurs, ne peuvent consulter - en supposant qu'ils aient accès aux données DATA1 - ces données DATA1 que dans l'état où elles se trouvaient avant l'exécution de l'opération demandée par cet utilisateur U1. En particulier, le contenu de l'espace mémoire intermédiaire EIT1 de l'utilisateur U1 ne leur est pas accessible.

Lors d'une session en mode d'accès faiblement sécurisé, un utilisateur U1 peut demander ou définir un nombre quelconque d'opérations de traitement de données destinées à être exécutées par le serveur AS. Les données intermédiaires DINT1 relatives à toutes les opérations définies par un utilisateur U1 sont stockées dans l'espace mémoire intermédiaire EIT1 de l'utilisateur U1. Le serveur AS est conçu pour fournir à l'utilisateur U1, à partir de ces données intermédiaires DINT1, une vue du contenu de cet espace mémoire intermédiaire EIT1 : cette vue comporte par exemple une liste des opérations demandées par l'utilisateur U1 et/ou les données résultant de ces opérations et/ou les données à traiter par ces opérations.

Lors d'une session avec mode d'accès fortement sécurisé, un utilisateur U1bis, sous réserve qu'il présente une relation prédéfinie avec un utilisateur U1, peut valider une ou des opérations parmi la liste des opérations demandées par cet utilisateur U1.

Dans ce but, si cette relation est vérifiée, cette liste d'opérations et/ou une vue des données résultant de ces opérations sont présentées à un utilisateur U1bis afin qu'il puisse sélectionner la ou les opérations qu'il souhaite valider. En alternative, toutes les opérations demandées par l'utilisateur U1 sont automatiquement validées dès lors que l'utilisateur U1 bis présente une relation prédéfinie avec l'utilisateur U1.

Lorsque le serveur AS valide des opérations demandées par l'utilisateur U1, il extrait les données intermédiaires DINT1 stockées dans l'espace mémoire intermédiaire EIT1 de l'utilisateur U1 pour ces opérations, puis:
- lorsque ces données intermédiaires DINT1 contiennent des données DATA1 Bis résultant des opérations à valider, le serveur AS copie simplement ces données DATA1Bis de l'espace mémoire intermédiaire EIT1 propre à l'utilisateur U1 dans l'espace ES1 de stockage de données associé à l'utilisateur U1;
- lorsque ces données intermédiaires DINT1 contiennent une liste d'opérations avec codes identifiant ces opérations et les données DATA1 sur lesquelles ces opérations s'appliquent, le serveur AS exécute les opérations demandées dans l'ordre dans lequel elles ont été demandées à partir de ces données DATA1 et des codes, puis enregistre les données DATA1bis résultantes dans l'espace ES11 de stockage de données de l'utilisateur U1;

Dans les deux cas, les données DATA1 bis résultant de la validation sont alors accessibles, en lecture et en écriture, par l'utilisateur U1bis couramment connecté, ainsi que par tout autre utilisateur autorisé à accéder à ces données ou à l'espace de stockage dans lequel elles sont stockées.

Lorsque les données initiales DATA1 ont été modifiées, ces données DATA1 sont remplacées par les données DATA1 bis résultantes.

L'invention permet une validation a posteriori d'opérations sensibles et présente plus de sécurité qu'un procédé basé uniquement sur authentification simple.

Afin de garantir la sécurité du système, une relation prédéterminée entre les premier et deuxième utilisateurs U1 et U1bis est vérifiée préalablement à la validation des opérations demandées par l'utilisateur U1: de cette manière, seul un deuxième utilisateur U1 bis présentant un lien avec un premier utilisateur U1 peut valider des opérations demandées par ce premier utilisateur: ce qui permet de garantir qu'un utilisateur donné ne puisse pas valider n'importe quelle opération et garde ainsi un contrôle sur les données mises à disposition via ce serveur.

Cette relation est vérifiée par exemple si le premier utilisateur U1 et le deuxième utilisateur U1bis sont identifiés par un même identifiant ID1 par le serveur AS : dans ce cas, ces deux utilisateurs U1 et U1bis sont vus par le serveur AS comme un seul et même utilisateur. L'identifiant d'un utilisateur est déterminé par le serveur AS sur la base des données d'identification et d'authentification fournis par cet utilisateur au moment de sa connexion. Un tel identifiant est en général distinct du code d'identification (par exemple le "login") utilisé comme donnée d'identification lors de la connexion. Peu importe ici que les utilisateurs U1 et U1bis soient ou non une seule et même personne physique: seul importe que ces deux utilisateurs soient connus du serveur AS comme étant un seul et même utilisateur "logique", c'est-à-dire soient connus sous un même identifiant d'utilisateur ID1. Dans cette optique, l'invention est applicable au cas où les données d'identification et d'authentification faible de l'utilisateur U1bis (login et mot de passe) sont transmises à un utilisateur U1 qui s'en sert pour se connecter en mode d'accès non sécurisé.

Afin cependant de préserver le système contre une usurpation de données d'identification et d'authentification (notamment celles fournies par l'utilisateur U1 lors de l'accès non sécurisé), cette relation n'est vérifiée en outre que si un secret du premier utilisateur U1, c'est-à-dire une information PWD1 propre au premier utilisateur U1, a été fournie au serveur AS lors de la deuxième session par le deuxième utilisateur U1 bis. Cette information PWD1 est par exemple une phrase clef, un mot de passe, un code personnel ou d'un objet associé de manière univoque à cet utilisateur, etc. Cette information est soit fournie par l'utilisateur lui-même lors de la première session, soit générée et/ou fournie par le serveur AS.

Plus généralement, cette relation est vérifiée si une relation entre une information PWD1 propre au premier utilisateur U1 et une information PWD1bis propre au deuxième utilisateur U1bis est établi, ce lien pouvant être :
- une relation d'égalité entre les deux informations PWD1 et PWD1 bis;
- une relation d'égalité entre une de ces deux informations et une transformation (chiffrement, déchiffrement, codage, décodage, hachage, etc) de l'autre information;
- une relation d'égalité entre une transformation (chiffrement, déchiffrement, codage, décodage, hachage, etc) de l'une des informations et une transformation de l'autre information (chiffrement, déchiffrement, codage, décodage, hachage, etc);

Quelque soit la méthode utilisée pour vérifier si une relation existe entre ces deux informations PWD1 et PWD1 bis, ces informations peuvent être obtenues de différentes manières: soit elles sont fournies par l'utilisateur (c'est le cas par exemple lorsqu'une telle information est un identifiant d'un utilisateur ou lorsque c'est l'utilisateur qui génère son propre code) ou générée par le serveur AS (c'est le cas par exemple lorsqu'une telle information est sous forme de mot de passe à usage unique).

Toute autre méthode permettant d'établir qu'il existe une relation entre le premier et le deuxième utilisateur est utilisable. De préférence une relation biunivoque sera définie et vérifiée par le serveur AS, de manière à garantir qu'un seul utilisateur soit autorisé à valider des opérations demandées par un autre utilisateur.

La vérification d'une telle relation permet d'éviter qu'une opération d'origine frauduleuse, demandée par un pirate, soit validée a postériori.

Enfin, une telle relation peut servir pour le serveur AS d'identifiant à partir duquel le serveur AS peut retrouver un jeu d'opérations à valider : dans ce cas, l'information PWD1 propre au premier utilisateur U1 et/ou l'information PWD1bis propre au deuxième utilisateur U1bis est stockée en association avec les données intermédiaires, destinées à être utilisées pour valider des opérations définies par le premier utilisateur. Puis, lors de la connexion du deuxième utilisateur, les opérations à valider sont déterminées à partir de l'information PWD1bis propre au deuxième utilisateur, sous réserve que la relation entre les informations PWD1 et PWD1bis soit vérifiée.

### Cas de données partagées par deux utilisateur U1 et U2 distincts

Dans le cas où les données à modifier sont des données D12 partagées entre deux utilisateurs U1 et U2 distincts logiquement (c'est-à-dire identifiés par le serveur AS au moyen de deux identifiants ID1 et ID2 différents), l'utilisateur U1bis= U2 peut être autorisé par l'utilisateur U1 à valider des opérations demandées par l'utilisateur U1 sur des données partagées D12 ou vise versa.

Dans cette hypothèse, l'espace mémoire intermédiaire utilisé pour les opérations sur ces données partagées est alors propre un espace EIT12 commun à ces deux utilisateurs (non représenté).

Dans cette hypothèse également, la relation à vérifier entre les utilisateurs U1 et U2 devra être une relation autre qu'une simple relation d'égalité entre identifiants d'utilisateurs (voir les exemples ci-dessus), puisque U1 et U2 sont vus comme distincts par le serveur AS. La relation à vérifier sera par exemple que les utilisateurs U1 et U2 partage un même secret.

### Cas de délégation de droits d'un utilisateur U1Bis à un utilisateur U1

L'invention est combinable avec tout mécanisme de délégation de droit d'accès. L'invention s'applique en effet également au cas où un utilisateur U1 Bis délègue des droits à un utilisateur U1 pour que l'utilisateur U1 définisse des opérations sur des données DATA1 des données stockées dans l'espace de stockage ES1. L'utilisateur U1bis pourra ensuite lors de la session fortement sécurisée valider les opérations définies par l'utilisateur U1. Dans ce cas, la relation à vérifier entre les utilisateurs U1 et U1bis devra être une relation autre qu'une simple relation d'égalité entre identifiants d'utilisateurs (voir les exemples ci-dessus), puisque U1 et U1bis sont vus comme distincts par le serveur AS. Il faudra en outre que le serveur AS vérifie préalablement que l'utilisateur U1bis dispose d'une délégation au moins pour certaines opérations et /ou certaines données.

Un mode de réalisation du procédé selon l'invention est décrit par référence à la figure 2.

A l'étape 200, un utilisateur U1 se connecte au serveur AS, fournissant un code d'identification et un mot de passe en vue de son authentification par le serveur AS au moyen d'une méthode d'authentification simple. En cas d'identification et d'authentification réussie, une première session de communication en mode faiblement sécurisé est alors établie entre son terminal T et le serveur AS. Le serveur AS, selon l'identifiant ID1 de l'utilisateur connecté et les autorisations d'accès qui lui associées, ES1 présente à cet utilisateur une vue de l'espace de stockage ES1 pour lequel il a une autorisation d'accès.

A l'étape 210, en cas d'authentification réussie à l'étape 200, l'utilisateur U1 formule une demande pour l'exécution d'au moins une opération de traitement sur des données DATA1 stockées dans l'espace de stockage ES1. Des données intermédiaires DINT1, relatives aux opérations demandées, sont alors stockées par le serveur AS dans l'espace mémoire intermédiaire EIT1 de l'utilisateur U1 (figure 3a).

A l'étape 220, l'utilisateur U1 transmet en outre au serveur AS une phrase clef, par exemple "je m'appelle Arthur". Le serveur AS mémorise cette phrase clef, dans l'espace mémoire intermédiaire EIT1 de l'utilisateur U1, avec les données intermédiaires DINT1.

A l'étape 230, le serveur AS présente à l'utilisateur U1 une vue du contenu de l'espace mémoire intermédiaire EIT1, contenant les données intermédiaires DINT1 générées par le serveur AS pour la ou les opérations demandées et définies par l'utilisateur U1 à l'étape 210. Cette vue comporte la liste des opérations demandées et/ou les données résultant DATA1bis de ces opérations et/ou les données DATA1 à traiter par ces opérations avec les codes d'opérations éventuellement associés.

A l'étape 240, la première session de communication est interrompue, sur demande du premier utilisateur U1.

A l'étape 300, un utilisateur U1bis se connecte au serveur AS, fournissant son identifiant, code PIN et certificat extrait de sa carte à puce, en vue de son authentification par le serveur AS au moyen d'une méthode d'authentification forte. En cas d'identification et d'authentification réussie, une deuxième session de communication en mode sécurisé est alors établie entre le terminal T et le serveur AS.

A l'étape 310, le serveur AS, après avoir détecté que les utilisateurs U1 et U1bis sont identiques et bien identifiés par un même identifiant ID1, présente à l'utilisateur U1bis une vue du contenu de l'espace mémoire intermédiaire EIT1 associé à cet identifiant ID1. Cette vue comporte la liste des opérations demandées et définies par l'utilisateur U1 à l'étape 220 et/ou les données résultant DATA1bis de ces opérations et/ou les données DATA1 à traiter par ces opérations

A l'étape 320, l'utilisateur U1bis transmet en outre la phrase clef déjà transmise lors de l'étape 220 et le serveur AS vérifie que la phrase clef est bien celle mémorisée dans l'espace mémoire intermédiaire EIT1,.

A l'étape 330, l'utilisateur U1bis demande la validation des opérations de traitement visualisées à l'étape 320 et mémorisées dans l'espace mémoire intermédiaire EIT1 en association avec la phrase clef. Le serveur AS exécute alors ces opérations, par exemple en copiant des données DATA1bis résultant de ces opérations de l'espace mémoire intermédiaire EIT1 vers l'espace de stockage ES1 1 associé à l'utilisateur U1 (figure 3b).

A l'étape 340, la deuxième session de communication est interrompue sur demande de l'utilisateur U1bis.

L'invention se généralise à la mise en oeuvre d'un mode d'accès non sécurisé dans lequel seule une identification du premier utilisateur U1 est requise, en association avec un mode d'accès sécurisé dans lequel une authentification simple ou forte du deuxième utilisateur U 1 bis est requise.

Le deuxième utilisateur U1bis, se connectant lors de la deuxième session et susceptible d'être autorisé à valider des opérations demandées par le premier utilisateur U1, est soit identique au premier utilisateur U1, soit le délégataire de U1, soit encore un utilisateur U2 partageant des données avec l'utilisateur U1.

En généralisant, le niveau de sécurité exigé lors de la deuxième session est toujours supérieur au niveau de sécurité exigé lors de la première session, d'où l'expression "authentification forte a posteriori" utilisée pour qualifier le processus de sécurisation mis en oeuvre par l'invention. La sécurité est garantie en ce que la confiance dans les opérations de traitement définies est donnée a posteriori, lors de la validation de ces opérations.

### Authentification forte a priori

L'invention prévoit également à la mise en oeuvre d'une "authentification forte a priori", pour laquelle le niveau de sécurité exigé lors de la première session est toujours supérieur au niveau de sécurité exigé lors de la deuxième session.

Dans ce cas, le processus de sécurisation exige qu'une demande soit formulée par un premier utilisateur U1 pour autoriser a priori un utilisateur U1bis à définir et / ou valider et / ou exécuter des opérations sur des premières données, lors d'une session ultérieure en mode faiblement sécurisé (i.e. sans authentification forte, mais uniquement sous authentification faible), sous réserve qu'une relation prédéfinie soit vérifiée entre les premier et deuxième utilisateurs U1 et U1 bis, cette relation étant de même nature que celle décrite dans le cas d'une authentification forte a posteriori. Dans ce cas, la confiance est donnée a priori lors de la première session, la définition et/ou la validation et/ou l'exécution des opérations pouvant s'effectuer avec un niveau de confiance plus faible.

De préférence, l'exécution et/ou la définition et/ou la validation d'une opération de traitement n'est autorisée lors de la session ultérieure que si une condition prédéterminée, fixée par le premier utilisateur U1 lors de la première session au moment de la formulation de la demande d'autorisation, est remplie. Cette condition est par exemple que l'exécution et/ou la définition et/ou la validation d'une opération soit requise et/ou démarrée pendant une période définie par le premier utilisateur U1 lors de la première session (par exemple, une journée, une heure, etc); ou bien que les opérations définies / validées / exécutées lors d'une session ultérieure se limitent à certaines opérations et/ou à certaines données choisies par le premier utilisateur U1 lors de la première session. Cette condition vise à limiter les risques d'atteinte aux données de l'utilisateur U1.

Ainsi, lors des accès ultérieurs sous authentification faible, les opérations demandées, et donc les données résultant de ces opérations ne seront validées, c'est-à-dire que les opérations ne seront exécutées effectivement, que si la relation entre les deux utilisateurs U1 et U1bis est vérifiée et si la condition formulée par le premier utilisateur U1 est vérifiée lors de la session ultérieure au moment de l'exécution et/ou de la définition et/ou de la validation d'une opération.

La relation à vérifier entre les deux utilisateurs U1 et U1bis impliquera de préférence la fourniture par le deuxième utilisateur U1bis d'une information propre au premier utilisateur U1, car, dans le cas d'une authentification forte a priori, les conséquences d'une usurpation d'identité par le deuxième utilisateur U1bis pourraient être la destruction par le pirate des données du premier utilisateur ou leur falsification. Ceci n'est pas le cas dans la méthode d'authentification forte a posteriori, car le deuxième utilisateur U1bis dispose au moins de la possibilité de vérifier les opérations demandées avant de les valider.

Dans le cas d'une authentification forte a priori, tout comme en cas d'authentification forte a posteriori, il est possible que les utilisateurs U1 et U1bis se connectant successivement puissent être distincts logiquement l'un de l'autre (par exemple U1bis = U2), mais que l'un bénéficie d'une délégation de la part de l'autre. Dans le cas d'une authentification forte a priori, c'est l'utilisateur U1, établissant la session fortement sécurisée, qui peut déléguer des droits à un autre utilisateur U1bis pour une session faiblement sécurisée ultérieure.

### Exemple d'application: cas d'une authentification forte a posteriori

L'invention est applicable par exemple au domaine médical. Dans ce domaine, en France, la législation impose une forte sécurisation des données médicales et recommande pour cela que les professionnels de santé utilisent leur carte CPS (Carte Professionnel de Santé) comme moyen d'authentification forte pour accéder à ces données médicales. De plus en plus, les services médicaux exigent donc que les données transmises soient des données dites de confiance, c'est-à-dire protégées, en lecture comme en écriture. Cependant, nombre de ces mêmes services acceptent que l'accès en lecture (voire en écriture) soit basé sur une authentification simple comme solution palliative à la carte CPS, car celle-ci ne peut pas être utilisée dans tous les cas.

Prenons le cas d'un médecin traitant qui a son propre cabinet: durant sa journée de travail, il peut utiliser les différents services sécurisés, ayant sa carte CPS en permanence insérée dans le lecteur de carte à puce de son ordinateur de travail. Lorsqu'il rentre chez lui, il peut ne pas avoir sa carte CPS, ou ne pas disposer de lecteur de carte à puce sur son ordinateur personnel. La seule solution pour accéder au service sécurisé est alors l'authentification simple, faille de sécurité évidente pour un service sensible.

Dans une telle situation, l'invention permet au professionnel de santé d'utiliser le service d'accès à des données avec une authentification simple, et de définir ou simuler des opérations qui ne seront validées que lors de sa prochaine connexion basée sur une authentification forte, lorsque, par exemple ce professionnel de santé sera de retour à son cabinet. La confiance des données ainsi transmises sera alors garantie.

Un autre cas d'application dans le domaine de la santé concerne les pratiques de délégation au secrétariat du droit de transmission des feuilles de soins électronique. Pour ce faire, le médecin confie son code personnel d'identification et mot de passe au secrétariat. Une personne du secrétariat peut ainsi requérir l'exécution d'opération en se connectant et en étant authentifié avec authentification simple sur la base du code et mot de passe fourni. La validation finale, c'est-à-dire l'envoi effectif des feuilles de soin, est effectué sur demande du médecin lors d'une autre connexion avec authentification forte du médecin au moyen de sa carte CPS, moyennant la transmission au médecin d'une phrase clef ou secret utilisée par la secrétaire.

Il existe bien d'autres domaines d'application de cette invention, par exemple les secteurs bancaires, militaires, l'administration électronique, l'éducation, etc.

## Revendications

1. Procédé de traitement de données mis en oeuvre par un serveur (AS), comprenant
- une étape de réception (210), lors d'une première session de communication établie avec ledit serveur, d'une demande formulée par un premier utilisateur (U1) définissant au moins une opération de traitement à exécuter sur des premières données;
- une étape d'exécution (330) de ladite opération de traitement sur lesdites premières données, lors d'une deuxième session de communication établie avec ledit serveur postérieurement à ladite première session pour un deuxième utilisateur (U1bis),
ladite étape d'exécution étant destinée à être mise en oeuvre à condition, d'une part, que le deuxième utilisateur ait été authentifié par une méthode d'authentification forte lors de la deuxième session, et, d'autre part, qu'une relation entre les premier et deuxième utilisateurs ait été vérifiée.

2. Procédé selon la revendication 1, dans lequel ladite relation est vérifiée si une relation est vérifiée entre une première information propre au premier utilisateur et une deuxième information propre au deuxième utilisateur.

3. Procédé selon la revendication 1, dans lequel ladite relation étant vérifiée si le deuxième utilisateur a délégué des droits au premier utilisateur.

4. Procédé selon la revendication 1, dans lequel ladite relation est vérifiée si un identifiant du premier utilisateur est identique à un identifiant du deuxième utilisateur.

5. Procédé selon la revendication 2, dans lequel ladite première, respectivement deuxième, information est fournie audit serveur par le premier, respectivement deuxième, utilisateur, lors de ladite première, respectivement deuxième, session.

6. Programme informatique comprenant des instructions logicielles pour la mise en oeuvre d'un procédé selon l'une des revendications 1 à 5 lorsque ledit programme est exécuté par un processeur de données.

7. Support d'enregistrement lisible par un processeur de données sur lequel est enregistré un programme comprenant des instructions de code de programme pour l'exécution des étapes d'un procédé selon l'une des revendications 1 à 5.

8. Dispositif de traitement de données, comprenant
- des moyens pour recevoir (210), lors d'une première session de communication établie avec ledit dispositif, une demande formulée par un premier utilisateur (U1) définissant au moins une opération de traitement à exécuter sur des premières données;
- des moyens d'exécution (330) d'une dite opération de traitement sur lesdites premières données, lors d'une deuxième session de communication établie avec ledit dispositif postérieurement à ladite première session pour un deuxième utilisateur (U1bis);
lesdits moyens d'exécution étant destinés à être activés à condition, d'une part, que le deuxième utilisateur ait été authentifié par une méthode d'authentification forte lors de la deuxième session, et, d'autre part, qu'une relation entre les premier et deuxième utilisateurs ait été vérifiée.

## Claims

1. Data processing method applied by a server (AS), comprising
- a step (210) of receiving, during a first communication session established with said server, a request formulated by a first user (U1) defining at least one processing operation to be executed on first data;
- a step (330) of executing said processing operation on said first data, during a second communication session established with said server after said first session for a second user (U1a), said execution step being designed to be executed on condition, on the one hand, that the second user has been authenticated via a high-level authentication method during the second session and, on the other hand, that a relationship between the first and second users has been verified.

2. Method according to Claim 1, in which said relationship is verified if a relationship is verified between a first item of information specific to the first user and a second item of information specific to the second user.

3. Method according to Claim 1, in which said relationship is verified if the second user has delegated entitlements to the first user.

4. Method according to Claim 1, in which said relationship is verified if an identifier of the first user is identical to an identifier of the second user.

5. Method according to Claim 2, in which said first, respectively second, item of information is supplied to said server by the first, respectively second, user, during said first, respectively second, session.

6. Computer program comprising software instructions for the application of a method according to one of Claims 1 to 5 when said program is executed by a data processor.

7. Recording medium, that can be read by a data processor, on which a program is recorded comprising program code instructions for the execution of the steps of a method according to one of Claims 1 to 5.

8. Data processing device, comprising
- means for receiving (210), during a first communication session established with said device, a request formulated by a first user (U1) defining at least one processing operation to be executed on first data;
- means (330) for executing said processing operation on said first data, during a second communication session established with said device after said first session for a second user (U1a); said execution means being designed to be activated on condition, on the one hand, that the second user has been authenticated via a high-level authentication method during the second session, and, on the other hand, that a relationship between the first and second users has been verified.

## Patentansprüche

1. Verfahren zur Datenverarbeitung, das von einem Server (AS) angewendet wird, enthaltend
- einen Schritt des Empfangs (210), bei einer mit dem Server aufgebauten ersten Kommunikationssitzung, einer von einem ersten Benutzer (U1) formulierten Anforderung, die mindestens einen an ersten Daten auszuführenden Verarbeitungsvorgang definiert;
- einen Schritt der Ausführung (330) des Verarbeitungsvorgangs an den ersten Daten bei einer zweiten Kommunikationssitzung, die mit dem Server nach der ersten Sitzung für einen zweiten Benutzer (U1bis) aufgebaut wird,
wobei der Ausführungsschritt dazu bestimmt ist, unter der Bedingung durchgeführt zu werden, dass einerseits der zweite Benutzer durch eine Methode starker Authentifizierung während der zweiten Sitzung authentifiziert wurde, und dass andererseits eine Beziehung zwischen dem ersten und dem zweiten Benutzer bestätigt wurde.

2. Verfahren nach Anspruch 1, bei dem die Beziehung bestätigt wird, wenn eine Beziehung zwischen einer ersten dem ersten Benutzer eigenen Information und einer zweiten dem zweiten Benutzer eigenen Information bestätigt wird.

3. Verfahren nach Anspruch 1, bei dem die Beziehung bestätigt wird, wenn der zweite Benutzer Rechte an den ersten Benutzer delegiert hat.

4. Verfahren nach Anspruch 1, bei dem die Beziehung bestätigt wird, wenn eine Kennung des ersten Benutzers gleich einer Kennung des zweiten Benutzers ist.

5. Verfahren nach Anspruch 2, bei der die erste bzw. zweite Information an den Server vom ersten bzw. zweiten Benutzer bei der ersten bzw. zweiten Sitzung geliefert wird.

6. EDV-Programm, das Software-Anweisungen zur Durchführung eines Verfahrens nach einem der Ansprüche 1 bis 5 enthält, wenn das Programm von einem Datenprozessor ausgeführt wird.

7. Aufzeichnungsträger, der von einem Datenprozessor lesbar und auf dem ein Programm aufgezeichnet ist, das Programmcodeanweisungen zur Durchführung der Schritte eines Verfahrens nach einem der Ansprüche 1 bis 5 enthält.

8. Datenverarbeitungsvorrichtung, die enthält
- Einrichtungen zum Empfang (210), bei einer ersten mit der Vorrichtung aufgebauten Kommunikationssitzung, einer von einem ersten Benutzer (U1) formulierten Anforderung, die mindestens einen an ersten Daten auszuführenden Verarbeitungsvorgang definiert;
- Einrichtungen zur Ausführung (330) des Verarbeitungsvorgangs an den ersten Daten bei einer zweiten Kommunikationssitzung, die mit der Vorrichtung nach der ersten Sitzung für einen zweiten Benutzer (U1bis) aufgebaut wird;
wobei die Ausführungseinrichtungen dazu bestimmt sind, unter der Bedingung aktiviert zu werden, dass einerseits der zweite Benutzer durch eine Methode starker Authentifizierung während der zweiten Sitzung authentifiziert wurde, und dass andererseits eine Beziehung zwischen dem ersten und dem zweiten Benutzer bestätigt wurde.
